# EUROPEAN PATENT SPECIFICATION

(11) **EP 2 165 989 B1**
(45) Date of publication and mention of the grant of the patent: **14.08.2019**
(21) Application number: 08764746.7
(22) Date of filing: 27.05.2008
(51) Int. Cl.: E04C 2/04, C04B 24/12, C04B 24/16, C04B 24/42, C04B 41/63, E04B 1/92, C04B 28/14, C04B 111/00, C04B 111/20, C04B 41/49, C04B 41/64

(54) **MILDEWPROOF PLASTERBOARD**
SCHIMMELBESTÄNDIGE GIPSKARTONPLATTE
PLAQUE DE PLÂTRE RÉSISTANT AUX MOISISSURES

(30) Priority: 19.06.2007 JP 2007161792
(43) Date of publication of application: 24.03.2010
(73) Proprietor: Yoshino Gypsum Co., Ltd., Chiyoda-ku Tokyo 100-0005 (JP)
(72) Inventor: WADA, Masahiro, Tokyo 100-0005 (JP); HASEGAWA, Tomoya, Tokyo 100-0005 (JP); TAIRA, Shizuo, Tokyo 100-0005 (JP); TSURUZAWA, Tsuneo, Tokyo 100-0005 (JP)
(74) Representative: Green, Mark Charles
(86) International application number: PCT/JP2008/059718
(87) International publication number: WO 2008/155979

(56) References cited:
- WO-A1-99/25936
- WO-A1-03/104583
- WO-A1-2006/036294
- WO-A1-2006/074255
- DE-A1-102005 008 184
- DE-U1- 8 911 195
- JP-A- 04 331 752
- JP-A- 08 034 655
- JP-A- 10 045 459
- JP-A- 63 017 248
- JP-A- 63 227 899

## Description

### TECHNICAL FIELD

The present invention relates to a gypsum board having mold resistance. More specifically, the present invention relates to a gypsum board whose anti-mold property lasts for a long period of time even if the gypsum board is used in a location where condensation occurs or which is likely to be splashed with water, such as the inside of an elevator shaft.

### BACKGROUND ART

Gypsum boards, which have excellent characteristics in fire prevention or resistance, sound insulation, heat insulation, and workability and are inexpensive, are widely used as a building interior material. Gypsum boards are usually manufactured by: mixing calcined gypsum, an adhesive agent, foam into which a foaming agent has been foamed for weight reduction (hereinafter simply referred to as "foam"), various additives, and water with a mixer; depositing the obtained gypsum slurry on continuously conveyed top-surface gypsum board paper (hereinafter referred to as "lower paper"); placing bottom-surface gypsum board paper (hereinafter referred to as "upper paper") conveyed at the same speed on top of the layer of this deposit while folding the lower paper along scores made one on each side edge of the lower paper for defining the width and thickness of a board, so as to enfold the deposit, and shaping the resulting body by causing it to pass through a forming machine that determines the thickness and width of the gypsum board; roughly cutting it after hardening the gypsum slurry; and thereafter cutting it to a product size after forcibly drying it in a drying machine. Thus, the gypsum board has a gypsum core formed of gypsum and various additives (hereinafter referred to as "core") covered with gypsum board paper (hereinafter referred to as "board paper").

The following are said to be the four conditions for the growth of fungi such as mold: (1) temperature; (2) air (oxygen); (3) nutrition; and (4) humidity. Consideration is given to these conditions in a situation where a gypsum board is installed in an average house or a room of a building as an interior material. First, regarding (1) temperature, a range of 20 to 30 °C is considered as a suitable growth condition for many kinds of mold, and this condition is of course satisfied. Regarding (2) air, a tiny amount of air is sufficient. Accordingly, this condition also is of course met. As for (3) nutrition, the board paper itself supplies nutrition such as cellulose fibers. Therefore, this condition also is met. Lastly, with respect to (4) humidity, unless in such locations as a kitchen and a bathroom, where condensation often occurs or water splashes frequently, moisture such as vapor in the air or a tiny amount of splashed water evaporates easily, so that the condition of mold growth is not met.

It is easy to imagine, however, that such a situation arises where the gypsum board does not dry immediately after absorbing moisture at such locations as in the shaft of an elevator under construction if the upper opening of the shaft is not sufficiently prepared for rainfall, thus allowing entry of rainwater into the shaft. With respect to gypsum boards to be installed in such locations, attempts have been made to prevent propagation of mold by adding an anti-mold agent to the board paper and/or core. For example, (a) methods of using board paper on which an anti-mold agent is applied (Patent Document 1, Patent Document 2, and Patent Document 3), (b) a method of impregnating a gypsum board with anti-mold agent liquid (Patent Document 4), (c) gypsum into which an anti-mold agent is mixed (Patent Document 5, Patent Document 6, Patent Document 7, and Patent Document 8), etc., are known.

Document DE102005008184 A1 discloses a gypsum board having mold resistance, comprising a gypsum core containing an anti-mold agent poorly soluble in water, and gypsum board paper containing an anti-mold agent poorly soluble in water.
[Patent Document 1] Japanese Laid-Open Patent Application Publication No. 59-121173
[Patent Document 2] Japanese Laid-Open Patent Application Publication No. 63-227899
[Patent Document 3] Japanese Laid-Open Patent Application Publication No. 4-69301
[Patent Document 4] Japanese Laid-Open Patent Application Publication No. 61-18705
[Patent Document 5] Japanese Laid-Open Patent Application Publication No. 63-17248
[Patent Document 6] Japanese Laid-Open Patent Application Publication No. 2-302354
[Patent Document 7] Japanese Laid-Open Patent Application Publication No. 4-331752
[Patent Document 8] Published Japanese Translation of PCT International Application, No. 2005-531440

### DISCLOSURE OF THE INVENTION

### PROBLEMS TO BE SOLVED BY THE INVENTION

However, in the case of applying an anti-mold agent to the board paper as in (a), water splashed onto the surfaces of the board paper washes away the anti-mold agent, so that it is difficult to extend the mold resistance effect for a long period of time. Likewise, in the case of impregnating a hardened core with an anti-mold agent as in (b), the anti-mold agent is included only in the surface layers of the core, so that the anti-mold agent is also washed away, making it difficult for the mold resistance effect to be extended for a long period of time.

Therefore, it is desirable to include an anti-mold agent in the core. In order for the mold resistance effect to be extended, however, it is insufficient to include an anti-mold agent in only part of the core. Rather, it is necessary to disperse an anti-mold agent evenly throughout the entire core. As a result, an anti-mold agent is added to a pre-hardened aqueous gypsum slurry in order to disperse the anti-mold agent evenly throughout the entire core as in (c). At this point, the anti-mold agent is preferably water-soluble so as to dissolve in the slurry. However, although having a low solubility of 2000 ppm, gypsum also is soluble in water. Therefore, even in the case of a gypsum board having an anti-mold agent included in the core, the water-soluble anti-mold agent gradually dissolves in water together with the gypsum where water continuously splashes onto the gypsum board. This makes it difficult to extend the mold resistance effect for a long period of time, so that conventionally, the additive amount of the anti-mold agent must be increased.

### MEANS FOR SOLVING THE PROBLEMS

A gypsum board in the present invention is made to solve the problems described above, and comprises the features as defined by claim 1.

The invention comprises further a method as defined by claim 6.

### EFFECTS OF THE INVENTION

Using a poorly water-soluble anti-mold agent and waterproofing the core have made it possible to prevent the anti-mold agent from dissolving from the board paper into water splashed onto the gypsum board and to prevent the anti-mold agent from dissolving from the core. This makes it possible to obtain a gypsum board whose anti-mold property lasts for a longer period of time and to reduce the additive amount of the anti-mold agent.

### BEST MODE FOR CARRYING OUT THE INVENTION

Next, a description is given in more detail of the present invention.

In the present invention, a poorly water-soluble anti-mold agent is used for the core and the board paper. The water solubility of the anti-mold agent is desirably less than or equal to 1000 ppm, more preferably less than or equal to 500 ppm, and yet, as defined by the invention, less than or equal to 200 ppm. Specific examples of the anti-mold agent may include TBZ (chemical name 2-(4-thiazolyl)-benzimidazole, of the benzimidazole family, water solubility = 30 ppm), BCM (chemical name 2-benzimidazol carbamic acid methyl ester, of the benzimidazole family, water solubility = insoluble), ZPT (chemical name: Bis[1-hydroxy-2(1H)pyridinethionato] zinc, of the pyrithione family, water solubility = 15 ppm), fluor-folpet (chemical name: N-(fluorodichloromethylthio)-phthalimide, of the N-haloalkylthio family, water solubility = insoluble), OIT (chemical name: 2-n-octyl 4-isothiazolin-3-one, of the isothiazolin family, water solubility = 480 ppm), IPBC (chemical name: 3-iodo-2-propyl butyl carbamate, of the organic iodine family, water solubility = 156 ppm), triclosan (chemical name: 2,4,4'-trichloro-2'-hydroxydiphenylether, of the chlorophenol family, water solubility = 10 ppm), diiodomethyl-p-tolylsulfone (chemical name: 1-[(diiodomethyl) sulfonyl]-4-methylbenzene, of the organic iodine family, water solubility = 100 ppm), and TCMTB (chemical name: 2-(4-thiocyanomethylthio)benzothiazole, of the thiazole family, water solubility = 330 ppm). The amount of the anti-mold agent added to the core, which varies with the kind of the anti-mold agent, is preferably 0.005 parts by mass to 1 part by mass on an active ingredient basis per 100 parts by mass of gypsum forming the core.

Anti-mold agents work effectively on different kinds of fungi depending on medical agents. Therefore, it is possible to prevent propagation of more kinds of mold by selecting and mixing multiple kinds of anti-mold agents and using them.

Further, it is desirable to use a silicone-based waterproofing agent such as methyl hydrogen polysiloxane as a waterproofing agent. The content of a waterproofing agent is desirably 0.1 to 1 part by mass per 100 parts by mass of gypsum forming the core. If the content of a waterproofing agent is less than 0.1 parts by mass, this results in a poor waterproofing effect, while adding more than 1 part by mass of a waterproofing agent does not cause substantial improvement of the effect. Waterproofing agents commonly used for gypsum boards, such as paraffin and asphalt, also produce the same effect.

The anti-mold agent can be added to the board paper either at the time of manufacturing the board paper or after manufacturing the board paper. Examples of methods of adding the anti-mold agent at the time of manufacturing the board paper may include mixing the anti-mold agent into the board paper by adding a solution in which the anti-mold agent is dispersed directly to pulp slurry. Further, examples of methods of adding the anti-mold agent after manufacturing the board paper may include applying a solution in which the anti-mold agent is dispersed with a roll coater or a brush, and spraying the board paper with the solution. Further, in the case of applying the anti-mold agent onto the board paper, it is desirable to apply the anti-mold agent after mixing the anti-mold agent with resin or starch in order to improve the retainability of the anti-mold agent to be used on the surfaces of the board paper. Further, since it is possible to prevent the outflow of the anti-mold agent by improving waterproofness, it is desirable to apply resin such as polyester resin, urethane resin, acrylic resin, acrylic urethane resin, or epoxy resin on the surfaces of the board paper, which are not in contact with the core. The resin may be applied either before or after manufacturing the gypsum board. Examples of application methods may include a roll coater, a flow coater, gravure printing, immersion, and spraying.

Further, the gypsum board having mold resistance according to the present invention may employ additives used in manufacturing ordinary gypsum boards. Examples of these additives may include agents for increasing the adhesion between the core and the board paper, such as starch, polyvinyl alcohol resin, and vinyl acetate-type resin; inorganic fillers such as vermiculite and clay; reinforcing agents such as glass fibers; and anti-dripping agents such as boric acid and tartaric acid.

### [Examples]

A description is given in further detail of the present invention, showing below the test results of examples and comparative examples. Needless to say, the present invention is not limited to the examples, and conditions may be changed unless the change impairs the effects of the present invention.

In the examples and the comparative examples of the present invention, gypsum slurry was prepared in a gypsum board manufacturing line using ordinary continuous pouring molding by adding water, foam, and a hardening accelerator to the calcined gypsum obtained by mixing and firing natural gypsum and chemical gypsum, and by further adding anti-mold agents and a waterproofing agent as required. Further, this gypsum slurry was covered continuously with upper paper and lower paper of gypsum board paper and was molded, so that a gypsum board of 910 mm × 1820 mm in size and 2.5 mm in thickness was manufactured after hardening and drying. Gypsum board paper with anti-mold agents and gypsum board paper with no anti-mold agents were used.

In the case of using an anti-mold agent, one or more of the five kinds illustrated in TABLE 1 were used alone or in combination, and were mixed with starch or acrylic resin (hereinafter referred to as "anti-mold agent mixture material") to be added to the board paper. Further, in the case of using a waterproofing agent, methyl hydrogen polysiloxane was used as a silicone-based waterproofing agent.

**TABLE 1**

| ANTI-MOLD AGENT | | | WATER SOLUBILITY [ppm] |
|---|---|---|---|
| ABBREVIATION | CHEMICAL NAME | STRUCTURAL FORMULA | |
| BCM | 2-bennzimidazol carbamic acid methylester | (I) | INSOLUBLE |
| TBZ | 2-(4-thiazolyl)-benzimidazole | (II) | 30 |
| IPBC | 3-Iodo-2-propyl Butyl Carbamate | (III) | 156 |
| OIT | 2-n-octyl 4-isothiazolin-3-one | (IV) | 480 |
| SPT | (2-pyridinethiol-1-oxide) sodium | (V) | 530000 |

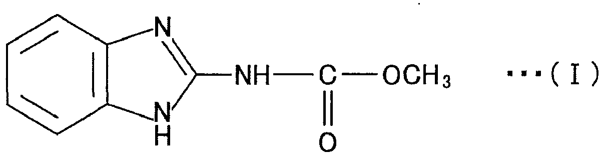

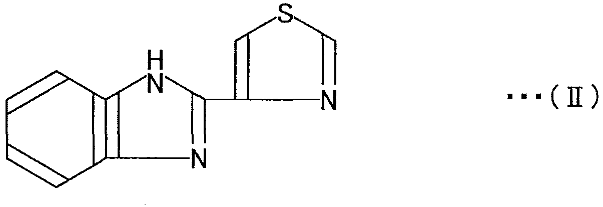

IC == CCH₂OOCNHC₄H₉ ··· (III)

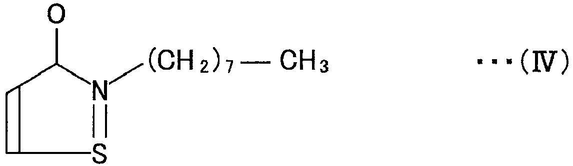

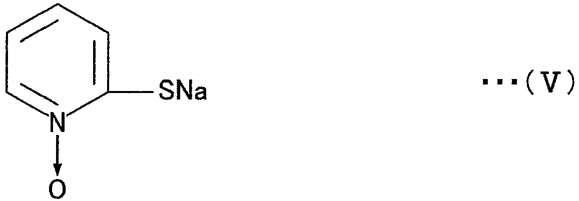

### [Test 1 - JIS Test]

Tests were conducted for four weeks under conditions based on "8. Test for paints" of JIS Z2911 "Methods of test for fungus resistance."

Mold fungus kinds: Four kinds--Aspergillus, Penicillium, Cladosporium, and Trichoderma--were mixed.

Gypsum board: The amounts of anti-mold agents and a waterproofing agent added to the core and the board paper are as illustrated in TABLE 2.

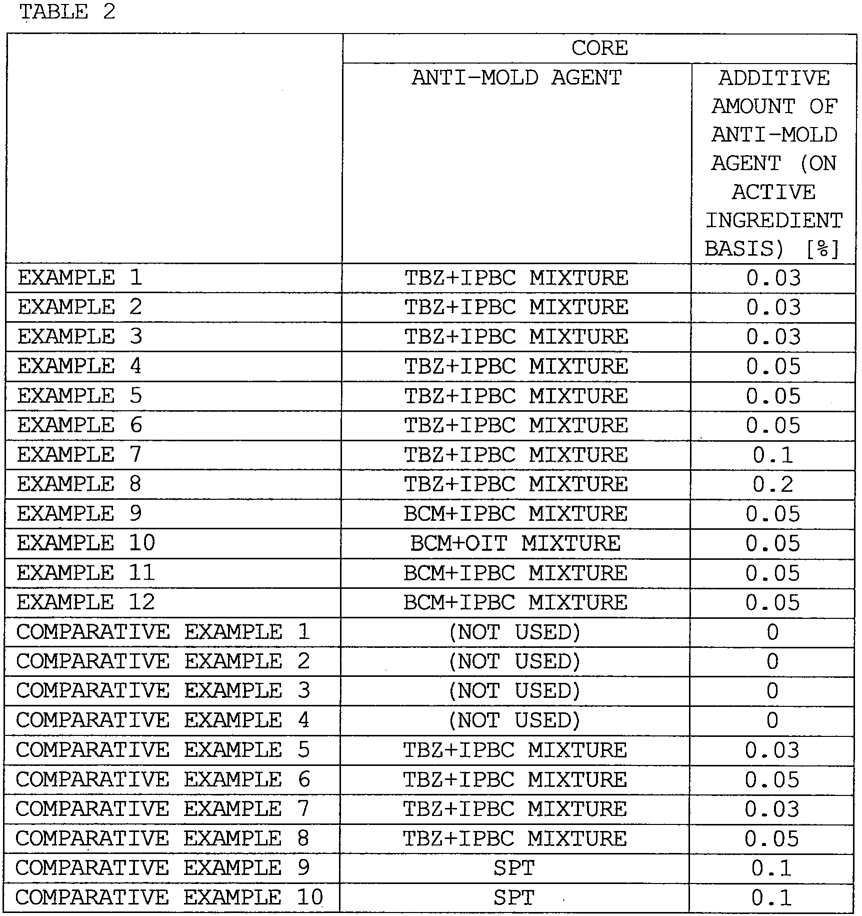

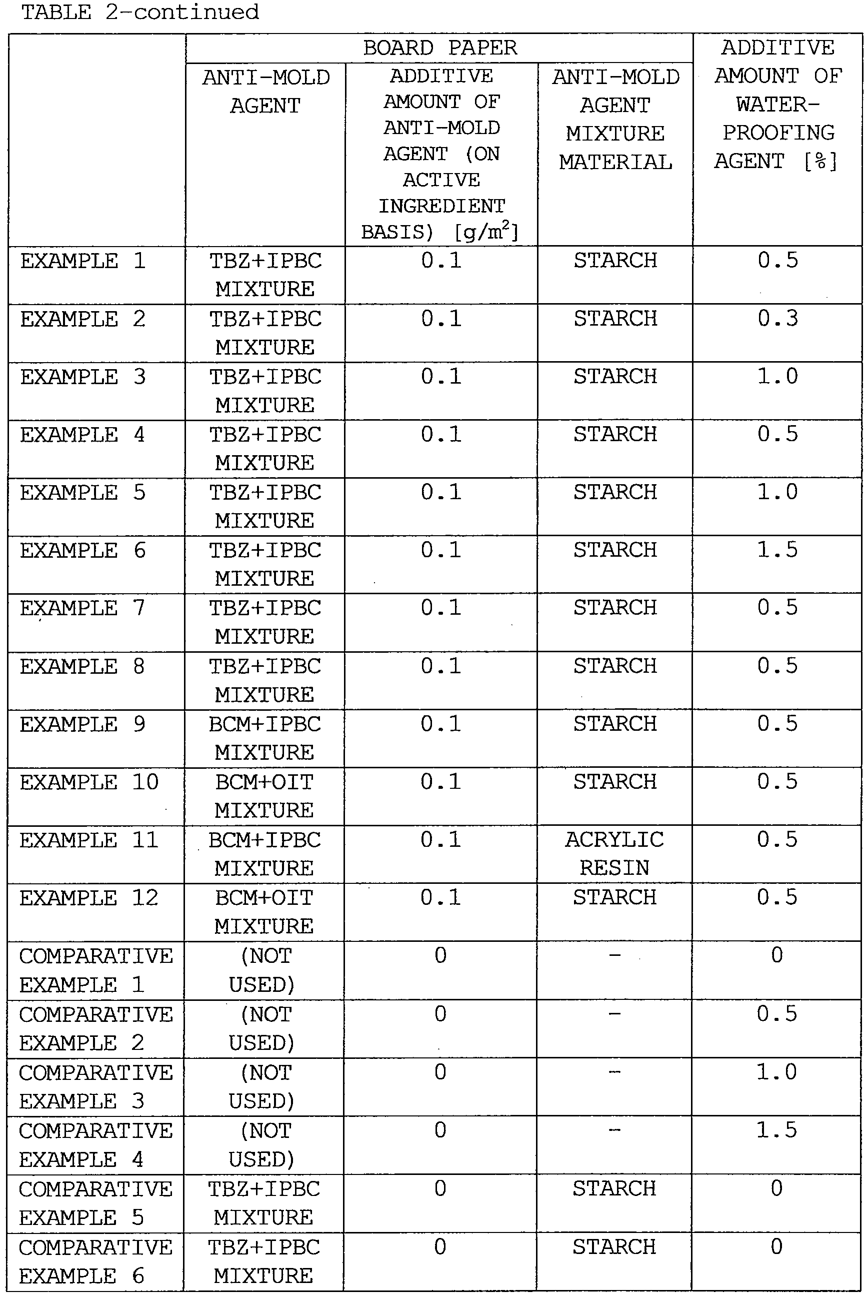

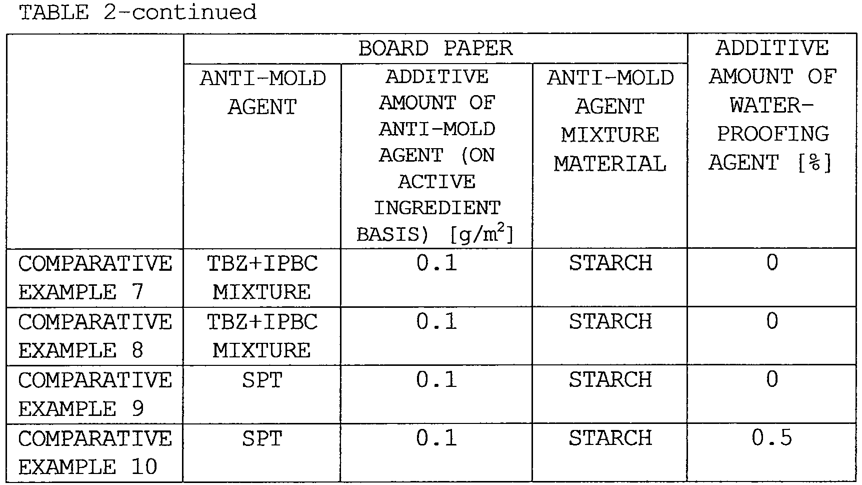

The test results were as illustrated in TABLE 3.

**TABLE 3**

| | DATE OF OCCURRENCE OF MOLD GROWTH | STATE OF MOLD GROWTH | | | |
|---|---|---|---|---|---|
| | | 1 WEEK LATER | 2 WEEKS LATER | 3 WEEKS LATER | 4 WEEKS LATER |
| EXAMPLE 1 | (NO OCCURRENCE) | 0 | 0 | 0 | 0 |
| EXAMPLE 2 | (NO OCCURRENCE) | 0 | 0 | 0 | 0 |
| EXAMPLE 3 | (NO OCCURRENCE) | 0 | 0 | 0 | 0 |
| EXAMPLE 4 | (NO OCCURRENCE) | 0 | 0 | 0 | 0 |
| EXAMPLE 5 | (NO OCCURRENCE) | 0 | 0 | 0 | 0 |
| EXAMPLE 6 | (NO OCCURRENCE) | 0 | 0 | 0 | 0 |
| EXAMPLE 7 | (NO OCCURRENCE) | 0 | 0 | 0 | 0 |
| EXAMPLE 8 | (NO OCCURRENCE) | 0 | 0 | 0 | 0 |
| EXAMPLE 9 | (NO OCCURRENCE) | 0 | 0 | 0 | 0 |
| EXAMPLE 10 | (NO OCCURRENCE) | 0 | 0 | 0 | 0 |
| EXAMPLE 11 | (NO OCCURRENCE) | 0 | 0 | 0 | 0 |
| EXAMPLE 12 | (NO OCCURRENCE) | 0 | 0 | 0 | 0 |
| COMPARATIVE EXAMPLE 1 | 3 DAYS LATER | 2 | 2 | 2 | 2 |
| COMPARATIVE EXAMPLE 2 | 4 DAYS LATER | 2 | 2 | 2 | 2 |
| COMPARATIVE EXAMPLE 3 | 5 DAYS LATER | 1 | 2 | 2 | 2 |
| COMPARATIVE EXAMPLE 4 | 5 DAYS LATER | 1 | 2 | 2 | 2 |
| COMPARATIVE EXAMPLE 5 | 8 DAYS LATER | 0 | 2 | 2 | 2 |
| COMPARATIVE EXAMPLE 6 | 12 DAYS LATER | 0 | 1 | 2 | 2 |
| COMPARATIVE EXAMPLE 7 | 12 DAYS LATER | 0 | 1 | 2 | 2 |
| COMPARATIVE EXAMPLE 8 | 16 DAYS LATER | 0 | 0 | 2 | 2 |
| COMPARATIVE EXAMPLE 9 | 15 DAYS LATER | 0 | 0 | 2 | 2 |
| COMPARATIVE EXAMPLE 10 | 19 DAYS LATER | 0 | 0 | 1 | 2 |

| | | | | | |
|---|---|---|---|---|---|
| [Legends] STATE OF MOLD GROWTH: 0 = no mold growth, 1 = the area of mold growth is less than a third, 2 = the area of mold growth exceeds a third. | | | | | |

In Test 1, gypsum boards were manufactured by combining TBZ, BCM, IPBC, and OIT and adjusting the additive amount of anti-mold agents and the additive amount of a waterproofing agent, and the test was conducted. As a result, no mold growth occurred in any case (Examples 1 to 10).

Further, like in Example 9, no mold growth occurred when the anti-mold agent mixture material used in Example 9 was switched from starch to acrylic resin (Example 11). Further, no mold growth occurred in the case of adding different kinds of anti-mold agents to the core and the board paper (Example 12).

On the other hand, in the case of using no anti-mold agent for either the core or the board paper, mold growth occurred three days later (Comparative Example 1). The occurrence of mold growth was delayed one day by adding 0.5% of a waterproofing agent to the core, and was further delayed by increasing the additive amount to 1.0% and to 1.5%, which, however, does not attain a desired level (Comparative Examples 2 to 4).

In the case of adding a TBZ-IPBC mixture agent only to the core, the occurrence of mold growth was delayed three or more days compared with the case of adding 1.5% of a waterproofing agent (Comparative Examples 5 and 6). The occurrence of mold growth was delayed another four days by further adding the same anti-mold agent mixture to the board paper (Comparative Examples 7 and 8), which, however, is still insufficient.

In the case of adding SPT, which has a high water solubility of 530000 ppm, to the core in an amount twice as much as in Comparative Example 8 (Comparative Example 9), only the same level of mold resistance as in Comparative Example 8 was attained. Further, mold growth occurred 19 days later even in the case of adding SPT to the board paper (Comparative Example 10).

### [Test 2 - Water Absorption Test]

In Test 1, the test was conducted according to JIS. In order to confirm a longer-term anti-mold effect under the condition where a gypsum board is constantly soaked with water, the following test was conducted.

The test method was to make a gypsum board to which one or more anti-mold agents and a waterproofing agent were added as illustrated in TABLE 4 and to fix the gypsum board to a wood shaft so that the gypsum board was soaked in water up to 10 mm from its bottom surface. Further, moisture was measured at the position of 50 mm from the bottom with a moisture meter (Concrete and Mortar Moisture tester HI-520, a product of Kett Electric Laboratory, was used), and the state of mold growth was observed while checking the state of water absorption at the position. The water was colored with red ink so as to allow understanding of the state of water penetration into the board.

**TABLE 4**

| | ANTI-MOLD AGENT | ANTI-MOLD AGENT CONTENT (ON ACTIVE INGREDIENT BASIS) | | WATERPROOFING AGENT CONTENT [%] |
|---|---|---|---|---|
| | | CORE [%] | BOARD PAPER [g/m²] | |
| EXAMPLE 1 | TBZ+IPBC MIXTURE | 0.03 | 0.1 | 0.5 |
| EXAMPLE 4 | TBZ+IPBC MIXTURE | 0.05 | 0.1 | 0.5 |
| EXAMPLE 5 | TBZ+IPBC MIXTURE | 0.05 | 0.1 | 1.0 |
| EXAMPLE 6 | TBZ+IPBC MIXTURE | 0.05 | 0.1 | 1.5 |
| EXAMPLE 7 | TBZ+IPBC MIXTURE | 0.1 | 0.1 | 0.5 |
| EXAMPLE 8 | TBZ+IPBC MIXTURE | 0.2 | 0.1 | 0.5 |
| EXAMPLE 9 | BCM+IPBC MIXTURE | 0.05 | 0.1 | 0.5 |
| EXAMPLE 10 | BCM+OIT MIXTURE | 0.05 | 0.1 | 0.5 |
| COMPARATIVE EXAMPLE 1 | (NOT USED) | 0 | 0 | 0 |
| COMPARATIVE EXAMPLE 2 | (NOT USED) | 0 | 0 | 0.5 |
| COMPARATIVE EXAMPLE 10 | SPT | 0.1 | 0.1 | 0.5 |

The test results were as illustrated in TABLE 5.

**TABLE 5**

| | DATE OF OCCURRENCE OF MOLD GROWTH |
|---|---|
| EXAMPLE 1 | 35 DAYS LATER |
| EXAMPLE 4 | 65 DAYS LATER |
| EXAMPLE 5 | 70 DAYS LATER |
| EXAMPLE 6 | 72 DAYS LATER |
| EXAMPLE 7 | 90 DAYS LATER |
| EXAMPLE 8 | 110 DAYS LATER |
| EXAMPLE 9 | 61 DAYS LATER |
| EXAMPLE 10 | 61 DAYS LATER |
| COMPARATIVE EXAMPLE 1 | 10 DAYS LATER |
| COMPARATIVE EXAMPLE 2 | 13 DAYS LATER |
| COMPARATIVE EXAMPLE 10 | 29 DAYS LATER |

Mold resistance has been found to last for a longer period of time in the examples than in the comparative examples. Further, the comparison of Example 7 and Comparative Example 10 has shown that use of an anti-mold agent lower in water solubility makes it possible to attain the same level of mold resistance with a smaller amount than an anti-mold agent higher in water solubility.

### [Test 3 - Outdoor Exposure Test]

In Tests 1 and 2, the effects of the present invention were confirmed under conditions where mold is likely to grow. Finally, a longer-term anti-mold effect was confirmed under the condition of outdoor exposure.

The outdoor exposure test was conducted for one year according to a test method in which a gypsum board was manufactured as an example, where 0.05% and 0.1 g/m² of a TBZ-IPBC anti-mold agent mixture were added to the core and the board paper, respectively, and 0.5% of a waterproofing agent was added to the core; a gypsum board using neither an anti-mold agent nor a waterproofing agent was manufactured as a comparative example; and the gypsum boards were waterproofed with a coat of aluminum tape so as to prevent water penetration through their sections.

As a result of the test, the gypsum board of the comparative example saw mold growth in a month from the start of the test, while the gypsum board of the examples saw no mold growth even after passage of one year from the start of the test.

### INDUSTRIAL APPLICABILITY

The present invention makes it possible to provide a gypsum board whose anti-mold property lasts for a long period of time even in the case of using the gypsum board in a location where water condensation is always present or in a location likely to be continuously splashed with water.

## Claims

1. A gypsum board having mold resistance, comprising:
a gypsum core containing first and second anti-mold agents and a waterproofing agent, the first and second anti-mold agents each having a water solubility of 200 ppm or less; and
a gypsum board paper covering two surfaces of the gypsum core, comprising a mixture of said first and second anti-mold agents and starch coated on a surface of the gypsum board paper, said surface being out of contact with the gypsum core, and
wherein the first anti-mold agent is 2-(4-thiazolyl)-benzimidazole (TBZ) or 2- benzimidazol carbamic acid methyl ester (BCM), and the second anti-mold agent is 3-iodo-2-propyl butyl carbamate (IPBC).

2. The gypsum board having the mold resistance as claimed in claim 1, wherein the waterproofing agent is a silicone-based waterproofing agent.

3. The gypsum board having mold resistance as claimed in claim 2, wherein the content of the silicone-based waterproofing agent is more than or equal to 0.1 parts by mass and less than or equal to 1 part by mass per 100 parts by mass of gypsum forming the gypsum core.

4. The gypsum board having the mold resistance as claimed in claim 2 or claim 3, wherein the silicone-based waterproofing agent is methyl hydrogen polysiloxane.

5. The gypsum board having the mold resistance as claimed in claim 1, wherein a total amount of the first and second anti-mold agents contained in the gypsum core is 0.005 parts by mass to 1 part by mass per 100 parts by mass of gypsum forming the gypsum core.

6. A method of manufacturing a gypsum board comprising:
preparing a gypsum core by mixing a gypsum slurry with first and second anti-mold agents and a waterproofing agent, the first and second anti-mold agents each having a water solubility of 200 ppm or less;
preparing a gypsum board paper, comprising a mixture of said first and second anti-mold agents and starch coated on one surface of the gypsum board paper;
attaching the gypsum board paper to the upper and lower surfaces of the gypsum core, the coated surface of the board paper being out of contact with the gypsum core;
wherein the first anti-mold agent is 2-(4-thiazolyl)-benzimidazole (TBZ) or 2- benzimidazol carbamic acid methyl ester (BCM), and the second anti-mold agent is 3-iodo-2-propyl butyl carbamate (IPBC).

## Patentansprüche

1. Gipskarton mit Schimmelbeständigkeit, Folgendes umfassend:
einen Gipskern, der ein erstes und ein zweites Schimmelschutzmittel und ein Imprägniermittel enthält, wobei das erste und das zweite Schimmelschutzmittel jeweils eine Wasserlöslichkeit von 200 ppm oder weniger aufweisen, und
ein Gipskartonpapier, das zwei Oberflächen des Gipskerns bedeckt und eine Mischung aus dem ersten und dem zweiten Schimmelschutzmittel und Stärke umfasst, mit der eine Oberfläche des Gipskartonpapiers beschichtet ist, wobei die Oberfläche nicht in Kontakt mit dem Gipskern steht, und
wobei das erste Schimmelschutzmittel 2-(4-Thiazolyl)-benzimidazol (TBZ) oder 2-Benzimidazol-Carbaminsäure-Methylester (BCM) ist und das zweite Schimmelschutzmittel 3-Jod-2-Propylbutylcarbamat (IPBC) ist.

2. Gipskarton mit Schimmelbeständigkeit nach Anspruch 1, wobei das Imprägniermittel ein Imprägniermittel auf Silikonbasis ist.

3. Gipskarton mit Schimmelbeständigkeit nach Anspruch 2, wobei der Gehalt an Imprägniermittel auf Silikonbasis größer oder gleich 0,1 Masseteile und kleiner oder gleich 1 Masseteil pro 100 Masseteile des Gipses ist, der den Gipskern bildet.

4. Gipskarton mit Schimmelbeständigkeit nach Anspruch 2 oder Anspruch 3, wobei das Imprägniermittel auf Silikonbasis Methylwasserstoff-Polysiloxan ist.

5. Gipskarton mit Schimmelbeständigkeit nach Anspruch 1, wobei eine Gesamtmenge des in dem Gipskern enthaltenen ersten und zweiten Schimmelschutzmittels 0,005 Masseteile bis 1 Masseteil pro 100 Masseteile des Gipses beträgt, der den Gipskern bildet.

6. Verfahren zur Herstellung eines Gipskartons, Folgendes umfassend:
Herstellen eines Gipskerns durch Mischen einer Gipsaufschlämmung mit einem ersten und einem zweiten Schimmelschutzmittel und einem Imprägniermittel, wobei das erste und das zweite Schimmelschutzmittel jeweils eine Wasserlöslichkeit von 200 ppm oder weniger aufweisen,
Herstellen eines Gipskartonpapiers, das eine Mischung aus dem ersten und dem zweiten Schimmelschutzmittel und Stärke umfasst, mit der eine Oberfläche des Gipskartonpapiers beschichtet ist,
Anbringen des Gipskartonpapiers an der oberen und der unteren Oberfläche des Gipskerns, wobei die beschichtete Oberfläche des Kartonpapiers nicht in Kontakt mit dem Gipskern steht,
wobei das erste Schimmelschutzmittel 2-(4-Thiazolyl)-benzimidazol (TBZ) oder 2-Benzimidazol-Carbaminsäure-Methylester (BCM) ist und das zweite Schimmelschutzmittel 3-Jod-2-Propylbutylcarbamat (IPBC) ist.

## Revendications

1. Plaque de plâtre ayant une résistance aux moisissures, comprenant :
une partie centrale en plâtre contenant des premier et second agents anti-moisissures et un agent d'imperméabilisation, les premier et second agents anti-moisissures ayant chacun une solubilité dans l'eau de 200 ppm ou moins ; et
un papier de plaque de plâtre recouvrant deux surfaces de la partie centrale en plâtre, comprenant un mélange desdits premier et second agents anti-moisissures et d'amidon appliqué sur une surface du papier de plaque de plâtre, ladite surface n'étant pas en contact avec la partie centrale en plâtre, et
dans laquelle le premier agent anti-moisissures est le 2-(4-thiazolyl)-benzimidazole (TBZ) ou le benzimidazole-2-ylcarbamate de méthyle (BCM), et le second agent anti-moisissures est le butylcarbamate de 3-iodo-2-propynyle (IPBC).

2. Plaque de plâtre ayant la résistance aux moisissures selon la revendication 1, dans laquelle l'agent d'imperméabilisation est un agent d'imperméabilisation à base de silicone.

3. Plaque de plâtre ayant la résistance aux moisissures selon la revendication 2, dans laquelle la teneur en agent d'imperméabilisation à base de silicone est supérieure ou égale à 0,1 partie en masse et inférieure ou égale à 1 partie en masse par 100 parties en masse de plâtre formant la partie centrale en plâtre.

4. Plaque de plâtre ayant la résistance aux moisissures selon la revendication 2 ou la revendication 3, dans laquelle l'agent d'imperméabilisation à base de silicone est du polysiloxane méthylé hydrogéné.

5. Plaque de plâtre ayant la résistance aux moisissures selon la revendication 1, dans laquelle une quantité totale des premier et second agents anti-moisissures présents dans la partie centrale en plâtre est comprise entre 0,005 partie en masse et 1 partie en masse par 100 parties en masse de plâtre formant la partie centrale en plâtre.

6. Procédé de fabrication d'une plaque de plâtre comprenant :
préparation d'une partie centrale en plâtre par mélange d'une pâte de plâtre avec les premier et second agents anti-moisissures et un agent
d'imperméabilisation, les premier et second agents anti-moisissures ayant chacun une solubilité dans l'eau de 200 ppm ou moins ;
préparation d'un papier de plaque de plâtre, comprenant un mélange desdits premier et second agents anti-moisissures et d'amidon appliqué sur une seule surface du papier de plaque de plâtre ;
fixation du papier de plaque de plâtre aux surfaces supérieure et inférieure de la partie centrale en plâtre, la surface revêtue du papier de plaque n'étant pas en contact avec la partie centrale en plâtre ;
dans lequel le premier agent anti-moisissures est le 2-(4-thiazolyl)-benzimidazole (TBZ) ou le benzimidazole-2-ylcarbamate de méthyle (BCM), et le second agent anti-moisissures est le butylcarbamate de 3-iodo-2-propynyle (IPBC).
